# EUROPÄISCHE PATENTSCHRIFT

(11) **EP 0 966 580 B1**
(45) Veröffentlichungstag und Bekanntmachung des Hinweises auf die Patenterteilung: **04.09.2002**
(21) Anmeldenummer: 98916854.7
(22) Anmeldetag: 04.03.1998
(51) Int. Cl.: E04D 12/00, B32B 27/12, B32B 27/20, A61B 19/08, A61F 13/15

(54) **FOLIE AUS KUNSTSTOFF MIT MINERALISCHEN ZUSATZSTOFFEN, VERFAHREN ZU DEREN HERSTELLUNG SOWIE VERWENDUNG DER FOLIE**
PLASTIC FILM WITH MINERAL ADDITIVES, METHOD FOR THE PRODUCTION AND USE THEREOF
FEUILLE DE MATIERE PLASTIQUE AVEC ADDITIFS MINERAUX, SON PROCEDE DE PRODUCTION ET SON UTILISATION

(30) Priorität: 07.03.1997 DE 19709352
(43) Veröffentlichungstag der Anmeldung: 29.12.1999
(73) Patentinhaber: Corovin GmbH, D-31224 Peine (DE)
(72) Erfinder: NICKEL, Axel, D-31226 Peine (DE); ETZOLD, Stefan, D-30855 Langenhagen (DE)
(74) Vertreter: Körner, Peter
(86) Internationale Anmeldenummer: DE9800641
(87) Internationale Veröffentlichungsnummer: WO98040581

(56) Entgegenhaltungen:
- EP-A- 0 259 128
- EP-A- 0 302 597
- EP-A- 0 309 073
- WO-A-96/19346
- WO-A-98/05501
- WO-A-98/05502
- DE-A- 4 322 747
- US-A- 4 438 167
- DATABASE WPI Section Ch, Week 9012 Derwent Publications Ltd., London, GB; Class A17, AN 90-085899 XP002073961 & JP 02 036 938 A (MITSUBISHI KASEI CORP)

## Beschreibung

Die Erfindung betrifft eine Folie aus Kunstoff mit mineralischen Zusatzstoffen, ein Verfahren zu deren Herstellung sowie eine Verwendung der Folie.

Folien mit mineralischen Zusatzstoffen sind bekannt, um poröse Eigenschaften zu gewinnen. Die Porösität entsteht dadurch, daß bei Dehnung der Folie Phasenübergangsgrenzen zwischen dem Kunststoffmaterial und den mineralischen Zusatzstoffen aufreißen und so Kapillaren bilden.

Damit die Kapillaren in gewünschter Weise entstehen können, muß das Kunststoffmaterial plastisch sein, aber trotzdem eine gewisse Zähigkeit darbieten. Außerdem ist eine geringe Dicke der Folie nötig, so daß sich die Kapillaren auch von einer Seite zur anderen Seite der Folie erstrecken können. Derartige Folien besitzen nur eine geringe mechanische Festigkeit, denn gegenüber einer reinen Kunststoffolie, die im Vergleich zu faserigen Materialien ohnehin schon eine geringere Festigkeit besitzt, führt die Einbettung der mineralischen Zusatzstoffe mit der Neigung zum Aufreißen der Folie an den Phasenübergangsgrenzen zu einer weiteren Schwächung der mechanischen Festigkeit.

Aus der US-A-4,438,167 ist es bekannt, eine Faserschicht und eine Foilienschicht zuerst aufeinanderzulegen und dann durch Beaufschlagung mit Druck und Wärme ineinander zu integrieren. Wenn anschließend die Schicht aus der Kombination von Fasern und Folie verstreckt wird, bilden sich Zwischenräume im Grenzbereich zwischen den Fasern und der Folie. Durchqueren die Fasern den Folienquerschnitt, so bilden diese Zwischenräume gleichzeitig Poren innerhalb der Folie.

Ferner ist aus der EP-A-0 302 597 bekannt, eine reine Folie mit anorganischen Bestandteilen zuerst zu verstrecken und anschließend mit einem Vlies zu verbinden und schrumpfen zu lassen. Bei diesem Verfahren wir die Verstreckung also ohne die kraft- und weg-begrenzende Wirkung eines Vlieses durchgeführt, so daß die daraus resultierende Sicherheit einer homogenen und materialunschädlichen Porenbildung im Film nicht gewährleistet ist.

Der Erfindung liegt die Aufgabe zugrunde, eine Folie und ein Verfahren zu deren Herstellung dahingehend zu verbessern, daß die mechanische Festigkeit wesentlich erhöht wird sowie eine Verwendung für eine derartige Folie anzugeben.

Diese Aufgabe wird bei einer Folie nach dem Oberbegriff des Anspruchs 1, bei einem Verfahren zu deren Herstellung nach dem Oberbegriff des Anspruchs 10 und bei einer Verwendung nach dem Oberbegriff des Anspruchs 13 und 14 durch die im jeweiligen Kennzeichen angegebenen Merkmale gelöst.

Die wesentliche Verbesserung der mechanischen Festigkeit der Folie wird durch das Laminat aus Vlies und Folie erreicht. Dabei werden die günstigeren mechanischen Eigenschaften einer Faserstruktur mit ausgenutzt. Die gleichen oder annähernd gleichen Dehnungseigenschaften von Vlies und Folie gewährleisten, daß bei auch nach der notwendigen Verstreckung der Verbund von Vlies und Folie erhalten bleibt, also eine Ablösung an den Prägemarken oder Reißen der Fasern oder Folie vermieden wird. Da die Fasern des Vlieses bei Verstreckung kristallisieren, nimmt ihre Festigkeit durch den zur Bildung der Kapillaren notwendigen Verstreckungsvorgang zu.

Trotz der plastischen Eigenschaften von Vlies und Folie ergeben sich nach dem Verstreckungsvorgang geringe Rückstellkräfte, die zwischen den Prägemarken zu einem Aufbauschen und einer Faltenlegung der Folie führen. Diese Falten stellen Sollknickstellen dar, was sich in der Weise positiv auswirkt, daß Knittergeräusche im Vergleich zu herkömmlichen Folien vermieden oder wesentlich gedämpft werden. Ferner ergibt sich durch das Vlies ein textiler Charakter, der sich sowohl optisch als auch vom Griff und der Hautverträglichkeit her positiv auswirkt. Auch das Aufbauschen der Folie verändert in positiver Weise deren Oberflächenstruktur und trägt auch zur Volumenvergrößerung bei. Da textile Materialien grundsätzlich flüssigkeitsdurchlässig sind, wird die atmungsaktive Eigenschaft der Folie durch die Kombination mit dem Vlies nicht beeinträchtigt.

Durch unterschiedliche Stärke der Verstreckung können die Atmungseigenschaften des Laminats verändert werden. Verwendet werden kann das so gewonnene Laminat im hygienischen und medizinischen Bereich sowie im Baubereich.

Bei einer ersten Ausführung besteht das Laminat aus einer Folienschicht und einer Vliesschicht und weist ein Flächengewicht kleiner als 20 Gramm pro Quadratmeter auf. Hierdurch entsteht ein Laminat, das sehr leicht und dünn ist, wodurch die Steifigkeit des Laminats gering gehalten werden kann. Ferner ist bei diesem Flächengewicht das Laminat durch seine geringe Dicke vielseitig verwendbar, beispielsweise für Windeln oder zur Textilveredelung. Der geeignete Flächenstrekkungsfaktor beträgt 2 bis 3,5. Hiermit ergeben sich sehr gute atmungsaktive Eigenschaften.

Bei einer zweiten Ausführung besteht das Laminat aus einer Folienschicht und zwei Vliesschichten, die auf beiden Seiten der Folienschicht angeordnet sind und ein Flächengewicht von 50 bis 100 g, vorzugsweise 80 g pro Quadratmeter aufweist. Dieses Material ist besonders stabil und reißfest. Der geeignete Flächenstreckungsfaktor beträgt 1,5 bis 2,5. Dieser Wert sorgt für gute atmungsaktive Eigenschaften.

Als Kunststoffgrundstoffe eignen sich Polyethylen und Polypropylen sowie Copolymere. Als mineralische Zusatzstoffe kommen z. B. Bariumsulfat, Kalziumkarbonat oder Silikate in Betracht. Diese Stoffe wurden als geeignet ermittelt, für ein kontrolliertes Aufreißen der Folie an den Phasenübergangsstellen zwischen mineralischen Stoffen und Kunststoffen zu sorgen. Außerdem sind diese Stoffe gesundheitlich unbedenklich.

Bei dem Verfahren zur Herstellung eines Laminats aus einer Folie und einem Vlies können diese zunächst getrennt hergestellt und zwischengelagert oder auch gemeinsam hergestellt, zusammengeführt und mittels eines thermischen Prägeverfahrens durch Kalanderwalzen fixiert werden. Alternativ ist auch eine Verbindung zwischen Folie und Vlies durch Verkleben möglich. Danach wird das Laminat entsprechend der gewünschten Porengröße verstreckt.

Es kann vorteilhaft sein, wenn die Folie während des Herstellungsprozesses direkt in der schmelzflüssigen Phase mit dem Vlies unter Aufbringung von mechanischen, aerodynamischen elektrostatischen Kräften zusammengefügt wird.

Eine Folie als Laminat mit einer Vliesschicht und einem Flächengewicht kleiner als 20 Gramm pro Quadratmeter sowie einem Flächenstreckungsfaktor zwischen 2 bis 3,5 kann als Außenhaut einer Windel, als Operationstuch oder als Abdecktuch eingesetzt werden. Dieser Einsatz wird durch das geringe Flächengewicht bei gleichzeitig hoher Stabilität, durch die Wasserdichtigkeit aber hohe Wasserdampfdurchlässigkeit und die atmungsaktiven Eigenschaften begünstigt. Außerdem ist das Laminat dicht für Bakterien oder Viren.

Eine Folie als Laminat mit zwei Vliesschichten und einem Flächengewicht zwischen 50 und 100 g pro Quadratmeter sowie einem Flächenstreckungsfaktor zwischen 1,5 bis 2,5 kann als Dachunterspannbahn eingesetzt werden. Die beiden Vliesschichten ergeben hier eine besonders hohe Stabilität. Gleichzeitig ist eine Wasserdichtigkeit aber Wasserdampfdurchlässigkeit gewährleistet.

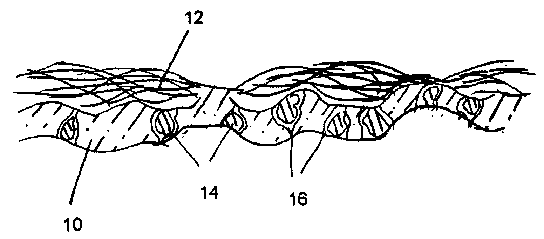

Nachfolgend wird die Erfindung anhand der Zeichnung näher erläutert. In dieser ist ein schematischer Schnitt durch ein Laminat nach der Erfindung dargestellt.

Die Zeichnung zeigt ein Laminat aus einer Folie 10 und einem Vlies 12. Die Folie 10 besteht aus Polyethylen oder Polypropylen mit mineralischen Zusatzstoffen 14. Die Folie 10 kann dabei durch ein an sich bekanntes Folienziehverfahren erzeugt werden, wobei als Basismaterial Kunststoff dient, der mit den mineralischen Zusatzstoffen vermischt wurde. Das Vlies 12 kann durch ein Spinnvliesverfahren oder ein Schmelzblasverfahren hergestellt werden.

Vlies 12 und Folie 10 werden, nachdem sie aufeinander gelegt wurden, durch ein thermisches Prägeverfahrens mit Kalanderwalzen verbunden und anschließend verstreckt. Durch die Verstreckung reißen die Phasenübergangsgrenzen zwischen den Einlagerungen der mineralischen Zusatzstoffe und des Kunststoffes auf, wobei sich Kapillaren 16 bilden. Diese Kapillaren 16 haben die Eigenschaft, daß sie lediglich atomare Stoffe hindurchlassen, während sie Stoffe aus größeren molekularen Verbänden sperren.

## Patentansprüche

1. Folie aus Kunststoff mit mindestens einem mineralischen Zusatzstoff (14), bei der durch Dehnung an Phasenübergangsgrenzen zwischen Kunststoff und mineralischen Zusatzstoffen Kapillaren ausgebildet sind, **dadurch gekennzeichnet, daß** die Folie (10) zusammen mit einem Vlies (12) aus Kunstoff ein Laminat bildet und das Laminat bleibend gedehnt ist, wobei die Kunststoffmaterialien von Folie (10) und Vlies (12) gleiche oder weitgehend gleiche plastische Dehnungeigenschaften aufweisen.

2. Folie nach Anspruch 1, **dadurch gekennzeichnet, daß** das Laminat aus einer Folienschicht (10) und einer Vliesschicht (12) besteht und ein Flächengewicht kleiner als 20 Gramm pro Quadratmeter aufweist.

3. Folie nach Anspruch 1 oder 2, **dadurch gekennzeichnet, daß** der Flächenstreckungsfaktor 2 bis 3,5 beträgt.

4. Folie nach Anspruch 1, **dadurch gekennzeichnet, daß** das Laminat aus einer Folienschicht (10) und zwei Vliesschichten (12) besteht die auf beiden Seiten der Folienschicht (10) angeordnet sind und ein Flächengewicht von 50 bis 100 g, vorzugsweise 80 g pro Quadratmeter aufweist.

5. Folie nach Anspruch 1 oder 2, **dadurch gekennzeichnet, daß** der Flächenstreckungsfaktor 1,5 bis 2,5 beträgt.

6. Folie nach einem der Ansprüche 1 bis 5, **dadurch gekennzeichnet, daß** das Kunststoffmaterial von Folie (10) und Vlies (12) Polyethylen oder Polypropylen ist.

7. Folie nach einem der Ansprüche 1 bis 6, **dadurch gekennzeichnet, daß** der mineralische Stoff (14) Bariumsulfat ist.

8. Folie nach einem der Ansprüche 1 bis 7, **dadurch gekennzeichnet, daß** der mineralische Stoff (14) Kalziumkarbonat ist.

9. Folie nach einem der Ansprüche 1 bis 8, **dadurch gekennzeichnet, daß** der mineralische Stoff (14) ein Silikat ist.

10. Verfahren zur Herstellung einer Folie aus Kunststoff mit mindestens einem mineralischen Zusatzstoff, bei der durch Dehnung an Phasenübergangsgrenzen zwischen Kunststoff und mineralischen Zusatzstoffen Kapillaren ausgebildet sind, **dadurch gekennzeichnet, daß** aus der Folie und einem Vlies ein Laminat gebildet wird und das Laminat anschließend gestreckt wird, so daß eine bleibende Dehnung von Folie und Vlies eintritt.

11. Verfahren nach Anspruch 10, **dadurch gekennzeichnet, daß** Folie und Vlies zuerst getrennt oder gemeinsam hergestellt werden und danach die Lagen aus Folie und Vlies aufeinandergelegt und durch ein thermisches Prägeverfahren oder durch Kleben zusammengefügt werden.

12. Verfahren nach Anspruch 10 oder 11, **dadurch gekennzeichnet, daß** die Folie während des Herstellungsprozesses in der schmelzflüssigen Phase direkt mit dem Vlies unter Aufbringung von mechanischen, aerodynamischen elektrostatischen Kräften zusammengefügt wird.

13. Verwendung einer Folie mit den Merkmalen der Ansprüche 2 oder 3, **dadurch gekennzeichnet, daß** die Folie als Außenhaut einer Windel, als Operationstuch oder als Abdecktuch eingesetzt wird.

14. Verwendung einer Folie mit den Merkmalen der Ansprüche 4 oder 5, **dadurch gekennzeichnet, daß** die Folie als Dachunterspannbahn eingesetzt wird.

## Claims

1. Plastic film having at least one mineral filler (14), in which plastic film capillaries are formed due to elongation at phase transition boundaries between plastic and mineral fillers, **characterized in that** the film (10) together with a plastic non-woven fabric (12) forms a laminate and the laminate is permanently elongated, the plastic materials of film (10) and non-woven fabric (12) having identical or largely identical plastic strain characteristics.

2. Film according to Claim 1, **characterized in that** the laminate is composed of a film layer (10) and a non-woven fabric layer (12) and has a weight per unit area of less than 20 grams per square metre.

3. Film according to Claim 1 or 2, **characterized in that** the stretch factor per unit area is 2 to 3.5.

4. Film according to Claim 1, **characterized in that** the laminate is composed of a film layer (10) and two non-woven fabric layers (12), which are arranged on both sides of the film layer (10) have a weight per unit area of 50 to 100 g, preferably 80 g per square metre.

5. Film according to Claim 1 or 2, **characterized in that** the stretch factor per unit area is 1.5 to 2.5.

6. Film according to one of Claims 1 to 5, **characterized in that** the plastic material of film (10) and non-woven fabric (12) is polyethylene or polypropylene.

7. Film according to one of Claims 1 to 6, **characterized in that** the mineral substance (14) is barium sulphate.

8. Film according to one of Claims 1 to 7, **characterized in that** the mineral substance (14) is calcium carbonate.

9. Film according to one of Claims 1 to 8, **characterized in that** the mineral substance (14) is a silicate.

10. Method for the manufacture of a plastic film having at least one mineral filler, in which plastic film capillaries are formed due to elongation at phase transition boundaries between plastic and mineral fillers, **characterized in that** a laminate is formed from the film and a non-woven fabric and the laminate is then stretched so that a permanent elongation of film and non-woven fabric occurs.

11. Method according to Claim 10, **characterized in that** film and non-woven fabric are manufactured separately or together and the layers of film and non-woven fabric are then laid one on top of another and joined together by a thermal embossing method or by adhesive bonding.

12. Method according to Claim 10 or 11, **characterized in that** during the manufacturing process the film in the molten phase is directly joined to the non-woven fabric by the application of mechanical, aerodynamic electrostatic forces.

13. Use of a film having the features of Claims 2 or 3, **characterized in that** the film is used as outer skin of a nappy, as surgical towel or as covering sheet.

14. Use of a film having the features of Claims 4 or 5, **characterized in that** the film is used as roof sheeting.

## Revendications

1. Feuille en matière artificielle avec au moins un additif minéral (14), dans laquelle des capillaires sont formés par allongement aux limites de transition de phase entre matière plastique et additifs minéraux, **caractérisée en ce que** la feuille (10) et un non-tissé (12) en matière plastique forment ensemble un stratifié et que ce stratifié est allongé de façon rémanente, la matière plastique de la feuille (10) et celle du non-tissé (12) présentant des propriétés d'allongement plastiques identiques ou largement similaires

2. Feuille suivant la revendication 1, **caractérisée en ce que** le stratifié est constitué d'une couche en feuille (10) et d'une couche en non-tissé (12) et qu'il présente un grammage inférieur à 20 grammes par mètre carré.

3. Feuille suivant la revendication 1 ou 2, **caractérisée en ce que** le facteur d'allongement de surface est compris entre 2 et 3,5.

4. Feuille suivant la revendication 1, **caractérisée en ce que** le stratifié est constitué d'une couche en feuille (10) et de deux couches en non-tissé (12), qui sont disposées de chaque côté de la couche en feuille (10), et présente un grammage compris entre 50 et 100 g, de préférence de 80 g par mètre carré.

5. Feuille suivant la revendication 1 ou 2, **caractérisée en ce que** le facteur d'allongement de surface est compris entre 1,5 et 2,5.

6. Feuille suivant une des revendications 1 à 5, **caractérisée en ce que** la matière plastique de la feuille (10) et du non-tissé (12) est du polyéthylène ou du polypropylène.

7. Feuille suivant une des revendications 1 à 6, **caractérisée en ce que** la matière minérale (14) est du sulfate de baryum.

8. Feuille suivant une des revendications 1 à 7, **caractérisée en ce que** la matière minérale (14) est du carbonate de calcium.

9. Feuille suivant une des revendications 1 à 8, **caractérisée en ce que** la matière minérale (14) est un silicate.

10. Procédé de fabrication d'une feuille en matière plastique avec au moins un additif minéral, dans laquelle des capillaires sont formés par allongement aux limites de transition de phase entre matière plastique et additifs minéraux, caractérisé en ce qu'un stratifié est formé de la feuille et d'un non-tissé et que le stratifié est ensuite étiré de façon à obtenir un allongement rémanent de la feuille et du non-tissé.

11. Procédé suivant la revendication 10, **caractérisé en ce que** la feuille et le non-tissé sont d'abord fabriqués séparément où ensemble et que les couches en feuille et en non-tissé sont ensuite superposées et assemblées par un procédé de gaufrage thermique ou par collage.

12. Procédé suivant la revendication 10 ou 11, **caractérisé en ce que** la feuille est directement assemblée avec le non-tissé en phase de fusion liquide pendant le processus de fabrication, en appliquant des forces mécaniques, aérodynamiques, électrostatiques.

13. Utilisation d'une feuille avec les caractéristiques des revendications 2 ou 3, **caractérisée en ce que** la feuille est utilisée comme revêtement extérieur d'une couche bébé, comme champ opératoire ou linge opératoire.

14. Utilisation d'une feuille avec les caractéristiques des revendications 4 ou 5, **caractérisée en ce que** la feuille est utilisée comme sous-toiture.
